(19) Europäisches Patentamt
European Patent Office
Office européen des brevets

(11) **EP 4 141 345 A1**

(12) **EUROPEAN PATENT APPLICATION**
published in accordance with Art. 153(4) EPC

(43) Date of publication:
**01.03.2023 Bulletin 2023/09**

(21) Application number: **20918128.8**

(22) Date of filing: **21.04.2020**

(51) International Patent Classification (IPC):
**F25B 1/00** *(2006.01)*    **F24F 11/47** *(2018.01)*

(52) Cooperative Patent Classification (CPC):
**F24F 11/47; F25B 1/00**

(86) International application number:
**PCT/JP2020/017153**

(87) International publication number:
**WO 2021/214858 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi-Johnson Controls Air
Conditioning, Inc.
Tokyo 105-0022 (JP)**

(72) Inventors:
- **KANAZAWA, Ritsuko
  Tokyo 100-8280 (JP)**
- **KOSAKA, Tadayoshi
  Tokyo 100-8280 (JP)**

(74) Representative: **MERH-IP Matias Erny Reichl
Hoffmann
Patentanwälte PartG mbB
Paul-Heyse-Strasse 29
80336 München (DE)**

(54) **AIR CONDITIONER AND MANAGEMENT DEVICE**

(57)    To limit not only the upper limit but also the lower limit of the power consumption of an air-conditioner. The air-conditioner includes a compressor, an outdoor heat exchanger, an expansion mechanism, an indoor heat exchanger, and an operation control section configured to control the operation frequency of the compressor such that the power consumption of the air-conditioner or the compressor reaches a value greater than a lower set value limit.

*FIG. 2*

**Description**

TECHNICAL FIELD

The present invention relates to an air-conditioner and a management device.

BACKGROUND ART

Typically, an air-conditioner covers much of a power consumption in a building, and for this reason, is equipment targeted for so-called demand response control for reducing the power consumption in a case where a power demand is extremely tight. Thus, the air-conditioner includes one equipped with, e.g., the function of cutting a power peak according to an air-conditioning power consumption state or performing compressor capacity reduction operation. Patent Literature 1 discloses a control device capable of setting, in a case where a power usage adjustment request is received, an air-conditioner control mode associated with responsiveness to the adjustment request and user's comfortability according to user's selection.

Meanwhile, in recent years, the concept of negawatt that a saved power in power-consuming equipment is also taken as a power generation amount has been developed, and a virtual power plant concept that a distributed energy resource installed on a demand side, such as cogeneration including solar power generation and a household fuel cell, a secondary cell, or an electric vehicle, is utilized for a power system and a new power demand adjustment service market have been prepared. For entering into a power demand adjustment service associated with power frequency adjustment, it has been demanded for the power-consuming equipment to perform operation for holding the power consumption of the power-consuming equipment oneself at a target instantaneous power consumption in a flat (with no up-down fluctuation) state as much as possible.

CITATION LIST

PATENT LITERATURE

PATENT LITERATURE 1: JP-A-2014-119218

SUMMARY OF INVENTION

PROBLEMS TO BE SOLVED BY INVENTION

The operation frequency of a compressor of the air-conditioner greatly changes every seconds according to user operation, a room temperature, an air temperature, and protection control operation (e.g., defrosting operation). The power consumption of the compressor covering most of the power consumption of the air-conditioner depends on the operation frequency of the compressor, and for this reason, the power consumption also greatly changes every seconds.

As in the device described above in Patent Literature 1, an air-conditioner for a typical demand response service has a mode for changing a set temperature such that an air-conditioning power consumption does not reach a certain upper limit or greater or reducing a compressor capacity to perform peak cut control. However, the typical technique is based on such an idea that a lower power consumption is better, and for this reason, a lower power limit is not managed. Moreover, the typical demand response service cannot cover a frequency adjustment power demand adjustment service that operation needs to be performed with a target power consumption while avoiding an excessive increase and decrease in an instantaneous power consumption.

The present invention has been made in view of the above-described problems, and is intended to provide the technique of limiting not only the upper limit but also the lower limit of the power consumption of an air-conditioner.

SOLUTION TO PROBLEMS

An air-conditioner according to the present invention includes: a compressor; an outdoor heat exchanger; an expansion mechanism; an indoor heat exchanger; and an operation control section configured to control an operation frequency of the compressor such that a power consumption of the air-conditioner or the compressor reaches a value greater than a lower set value limit.

A management device according to another embodiment of the present invention includes an operation control section configured to control an operation frequency of a compressor such that a power consumption of an air-conditioner including the compressor, an outdoor heat exchanger, an expansion mechanism, and an indoor heat exchanger or a power consumption of the compressor reaches a value greater than a lower set value limit.

EFFECTS OF INVENTION

According to the present invention, not only the upper limit but also the lower limit of the power consumption of the air-conditioner can be limited.

BRIEF DESCRIPTION OF DRAWINGS

Fig. 1 is an entire configuration diagram of an air-conditioning system according to a first embodiment.
Fig. 2 is a configuration diagram of an outdoor control device.
Fig. 3 is a table showing a data configuration example of normal mode parameters.
Fig. 4 is a table showing a data configuration example of power mode parameters.
Fig. 5 is a flowchart showing DR management processing.
Fig. 6 is a flowchart showing operation control processing.
Fig. 7 is a flowchart showing the operation control processing.
Fig. 8 is a flowchart showing detailed processing in power adjustment processing.
Fig. 9 is a graph showing a temporal change in a power consumption in normal operation.
Fig. 10 is a graph showing a temporal change in the power consumption in power adjustment operation.
Fig. 11 is a diagram of the entirety of an air-conditioning system 11 according to a second embodiment.
Fig. 12 is a flowchart showing operation control processing according to the second embodiment.

DESCRIPTION OF EMBODIMENTS

(First Embodiment)

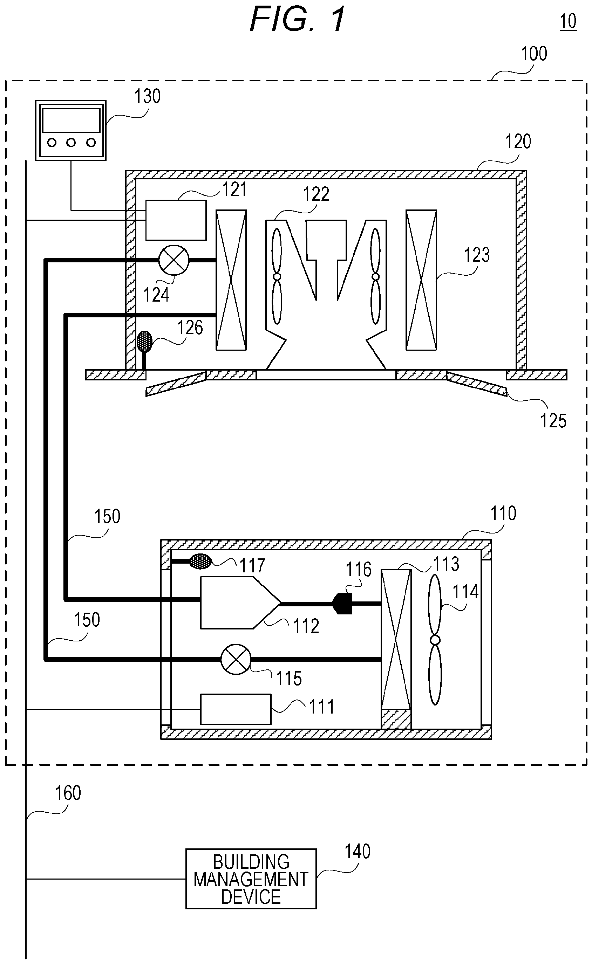

Fig. 1 is an entire configuration diagram of an air-conditioning system 10 according to a first embodiment. The air-conditioning system 10 has an air-conditioner 100 and a building management device 140. The air-conditioner 100 has an outdoor unit 110 and an indoor unit 120. Only one indoor unit 120 is shown in Fig. 1, but the air-conditioner 100 has multiple indoor units 120. Note that as another example, the air-conditioner 100 may have only one indoor unit 120.
The indoor unit 120 is placed on, e.g., a ceiling in a room as an air-conditioning target space to air-condition the inside of the room. The outdoor unit 110 and the indoor unit 120 are connected to each other via refrigerant pipes 150 and a communication network 160. A remote controller 130 is connected to each indoor unit 120 via, e.g., infrared light. The air-conditioner 100 is further connected to the building management device 140 via the communication network 160. Communication between the outdoor unit 110 and the indoor unit 120 and communication between the air-conditioner 100 and the building management device 140 may be wired or wireless communication, and are performed via a network such as the Internet.
The outdoor unit 110 includes an outdoor control device 111, a compressor 112 of which operation frequency is changeable, an outdoor heat exchanger 113, an outdoor fan 114, an outdoor expansion valve 115 as an expansion mechanism, a four-way switching valve 116, and a sensor group 117. The sensor group 117 includes a power sensor configured to measure the power consumption of the compressor 112, a pressure sensor configured to measure a pressure, and temperature sensors configured to measure an external air temperature and a refrigerant pipe temperature. Note that the sensor group 117 may include sensors other than above. The outdoor control device 111 controls equipment included in the outdoor unit 110, and controls operation of the outdoor unit 110 while communicating with an indoor control device 121 via the communication network 160.
The indoor unit 120 includes the indoor control device 121, an indoor fan 122, an indoor heat exchanger 123, an indoor expansion valve 124 as an expansion mechanism, a movable louver 125 configured to adjust a wind direction, and a sensor group 126 including, e.g., temperature sensors configured to measure a room temperature, a blow temperature and the like. The indoor control device 121 controls equipment included in the indoor unit 120, and controls operation of the indoor unit 120 while communicating with the outdoor unit 110 and the remote controller 130. Note that Fig. 1 shows a sectional view of the indoor unit 120 which is of a so-called ceiling embedded type that a body is fitted and placed in a ceiling member. Thus, the indoor heat exchangers 123 are shown on the right and left sides, but are integrally formed.
The refrigerant pipes 150 connect the compressor 112, the four-way switching valve 116, the outdoor heat exchanger 113, the outdoor expansion valve 115, the indoor expansion valve 124, and the indoor heat exchanger 123 in an annular shape, thereby forming a refrigeration cycle of the air-conditioner 100. Refrigerant is reversibly circulated by the four-way switching valve 116 such that the cycle is switched between an air-cooling operation cycle and an air-heating operation cycle.

The remote controller 130 is connected to the indoor unit 120 via a dedicated line such as infrared light. A button switch, a touch panel and the like for inputting an operation setting instruction to the air-conditioner 100 by a user are provided on the remote controller 130. The operation setting instruction described herein includes, for example, an instruction for a set temperature and an instruction for starting or stopping air-cooling operation or air-heating operation. Further, e.g., a liquid crystal screen for providing the user with error information, an actual operation state and the like from the equipment of the outdoor unit 110 and the indoor unit 120 is provided on the remote controller 130.

Normally, the outdoor control device 111 of the outdoor unit 110 controls operation of each type of equipment based on a user's operation instruction obtained from the indoor unit 120 via the communication network 160 and measurement values of various sensors. Specifically, the outdoor control device 111 controls the operation frequency of the compressor 112, switching of the four-way switching valve 116 between an air-cooling mode connection state and an air-heating mode connection state, the degree of opening of the outdoor expansion valve 115, and the rotation speed of the outdoor fan 114. The indoor control device 121 of the indoor unit 120 controls the rotation speed of the indoor fan 122 based on the user's operation instruction from the remote controller 130 and the measurement values of various sensors. In this manner, air-conditioning operation is performed such that the room temperature reaches that set by the user.

The building management device 140 is an information processing device, and is a device configured to manage and the air-conditioner 100 and other types of equipment placed at a building at which the air-conditioner 100 is placed.

The air-conditioner 100 of the present embodiment can perform operation corresponding to a power adjustment demand response service (hereinafter referred to as a "DR service"). In the present embodiment, the building management device 140 relays a service server operated by a DR service provider and the air-conditioner 100 to each other. The building management device 140 transmits, according to an instruction from the service server, a DR command such as a command (a DR entry command) for entry into the DR service or a command (a DR withdrawal command) for withdrawal from the DR service to the air-conditioner 100. The DR command described herein is one example of a power adjustment command. The building management device 140 of the present embodiment regularly acquires the power consumption of each air-conditioner 100 connected to the communication network 160. The building management device 140 transmits the DR entry command or the DR withdrawal command to the air-conditioner 100. The building management device 140 transmits a target power consumption together with the DR entry command. Note that the target power consumption is a target value of the power consumption of the entirety of the air-conditioner 100.

The air-conditioner 100 of the present embodiment switches a power mode from a normal mode to a power adjustment mode in the case of receiving the DR entry command. The normal mode described herein is a control mode for performing the air-conditioning operation (the air-cooling/heating operation) such that the temperature reaches that corresponding to a user's setting. The air-conditioning operation in the normal mode will be referred to as normal operation. The power adjustment mode is a control mode for performing the air-conditioning operation according to the target power consumption associated with the DR entry command. The power adjustment mode is a mode in which the processing of limiting the maximum and minimum values of the power consumption amount is performed such that the instantaneous power consumption of the compressor 112 more smoothly transitions as compared to the normal mode. The air-conditioning operation in such a power adjustment mode will be referred to as power adjustment operation. When receiving a DR service end instruction, the air-conditioner 100 switches the power mode from the power adjustment mode to the normal mode to perform the normal operation.

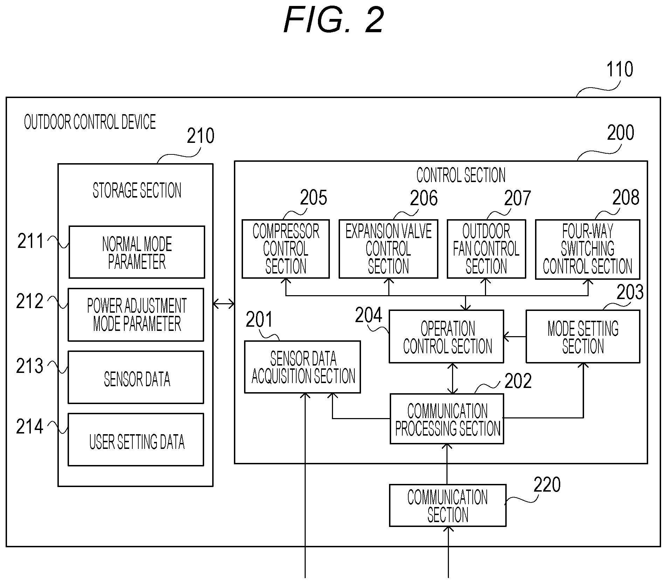

Fig. 2 is a configuration diagram of the outdoor control device 111. The outdoor unit 110 has a control section 200 having a CPU, a ROM, a RAM and the like, a storage section 210, and a communication section 220. The control section 200 executes various programs stored in the storage section 210 and the ROM, thereby controlling the entirety of the outdoor control device 111. The storage section 210 stores various types of data and various programs. The communication section 220 communicates with an external device via the communication network 160.

The storage section 210 stores normal mode parameters 211, power adjustment mode parameters 212, sensor data 213, and user setting data 214. The normal mode parameter 211 is an air-cooling/heating operation parameter to be referred in a case where the power mode is set to the normal mode. The power adjustment mode parameter 212 is an air-cooling/heating operation parameter to be referred in a case where the power mode is set to the power adjustment mode. The sensor data 213 includes the measurement values detected by the sensor groups 117, 126. The user setting data 214 is mainly operation setting information input by user operation via the remote controller 130.

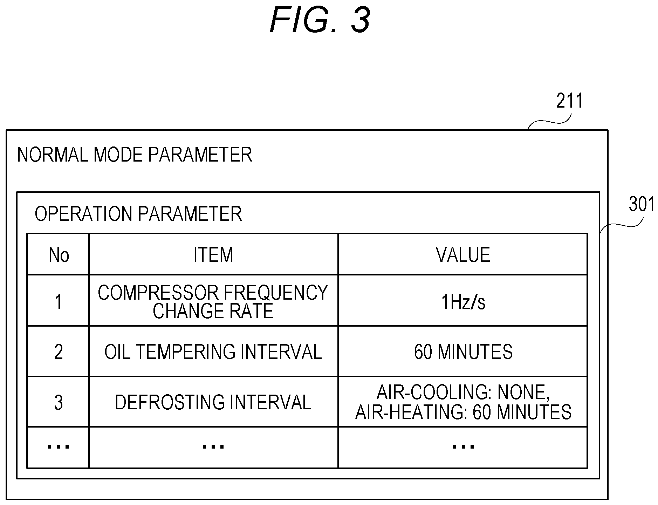

Fig. 3 is a table showing a data configuration example of the normal mode parameters 211. The normal mode parameters 211 include operation parameters 301 in the normal mode. The operation parameters 301 include a compressor frequency change rate, an oil tempering interval, and a defrosting interval. Note that the operation parameters 301 further include an air-conditioning capacity in the normal mode, the configuration of the compressor 112, and a parameter necessary for an equipped operation mode and protection processing, but the parameters to be changed between the normal mode and the power adjustment mode will be described herein.

The compressor frequency change rate is a change rate until the operation frequency of the compressor 112 reaches a target operation frequency in a case where the operation frequency needs to be changed according to, e.g., the set temperature. The oil tempering interval and the defrosting interval are periods for executing oil tempering processing and defrosting processing, i.e., execution intervals. That is, each type of processing is executed at intervals. The oil tempering processing described herein is the processing of returning oil having flowed out to the refrigerant pipe 150 to the compressor 112. The defrosting processing is the processing of melting and removing frost adhering to the outdoor heat exchanger 113 in the air-heating operation. Any of the oil tempering processing and the defrosting processing is one example of the protection processing of protecting the air-conditioner 100.

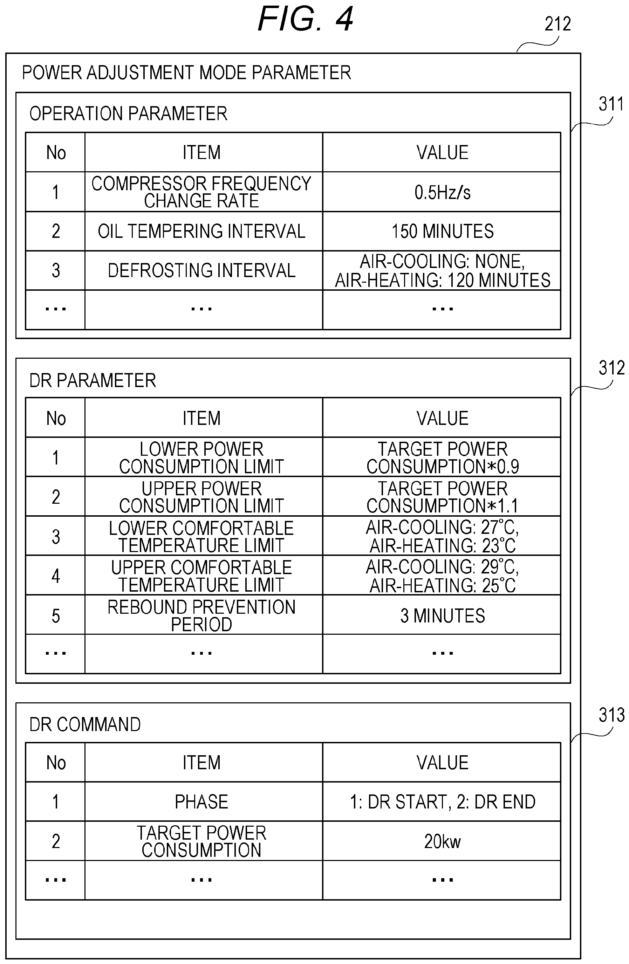

Fig. 4 is a table showing a data configuration example of the power adjustment mode parameters 212. The power adjustment mode parameters 212 include operation parameters 311 in the power mode, DR parameters 312, and DR commands 313. As in the operation parameters 301 of the normal mode parameters 211, the operation parameters 311 include a compressor frequency change rate, an oil tempering interval, and a defrosting interval. Note that the value of each item is different between the operation parameter 311 and the operation parameter 301.

The compressor frequency change rate is set to 1 Hz/s as the operation parameter 301, and is set to 0.5 Hz/s as the operation parameter 311. Note that it may only be required that the compressor frequency change rate in the power adjustment mode is a value greater than the compressor frequency change rate in the normal mode, and a specific value is not limited to that of the embodiment.

Priority is preferably given to improvement of control reaction of the compressor 112 in the normal mode, and on the other hand, is preferably given to smoothening (decrease) of a power consumption change in the power adjustment mode. Thus, in the present embodiment, a value greater than the compressor frequency change rate in the normal mode is set as the compressor frequency change rate in the power adjustment mode.

The oil tempering interval is set to 60 minutes as the operation parameter 301, and is set to 150 minutes as the operation parameter 311. The defrosting interval is set to 60 minutes as the operation parameter 301, and is set to 120 minutes as the operation parameter 311. Note that it may only be required that the protection processing interval (the execution interval) in the power adjustment mode is a period longer than the protection processing interval in the normal mode, and a specific value is not limited to that of the embodiment.

The compressor 112 needs to be operated with a special high frequency in the oil tempering processing and the defrosting processing in air-heating, and during such processing, a high consumed power in an impulse form is caused. For this reason, in the power adjustment mode, execution of such protection processing is preferably avoided as much as possible. Thus, in the present embodiment, a period longer than the execution interval of the protection processing in the normal mode is set as the execution interval of the protection processing in the power adjustment mode.

Note that the execution interval of the oil tempering processing in the power adjustment mode may be calculated from, e.g., the pipe length of the refrigerant pipe 150. The execution interval of the defrosting processing in the power adjustment mode may be calculated based on the external air temperature at the time of the processing. Note that in this case, the execution interval of the oil tempering processing in the power adjustment mode is longer than the execution interval of the oil tempering processing in the normal mode. Conversely, depending on the capacity, it may be set such that the defrosting operation is executed frequently to decrease the power consumption during the defrosting operation.

The DR parameter 312 is a parameter for satisfying a condition required by the DR service. The DR parameters 312 include a lower power consumption limit, an upper power consumption limit, a lower comfortable temperature limit, and an upper comfortable temperature limit. The lower power consumption limit and the upper power consumption limit are the lower and upper limits of a power consumption range acceptable in the power adjustment mode. The power consumption range is an acceptable error range with respect to the target power consumption in the DR service. In the present embodiment, a range with respect to the target power consumption is set as the power consumption range. In the example shown in Fig. 4, a range of $\pm 10\%$ with respect to the target power consumption is set as the power consumption range. That is, the lower power consumption limit is a set value (a lower set value limit) of the lower limit, and the upper power consumption limit is a set value (an upper set value limit) of the upper limit.

The lower comfortable temperature limit and the upper comfortable temperature limit are the lower and upper limits of a comfortable temperature range to be referred in the power adjustment mode. The lower comfortable temperature limit and the upper comfortable temperature limit are preset values. A rebound prevention period is a period required for changing the operation frequency of the compressor 112 to a set value in the normal mode when the power adjustment mode transitions to the normal mode, and is a preset period. When the operation frequency of the compressor 112 is changed to a greater value within a short period in association with transition from the power adjustment mode to the normal mode, fluctuation in the power consumption of the compressor 112 becomes greater. For this reason, in the rebound prevention period, the outdoor control device 111 controls the operation frequency of the compressor 112 to change in a stepwise manner from an operation frequency set at the time of providing an instruction for transition to an operation frequency set in the normal mode.

Note that the DR parameters 312 are set to the storage section 210 in advance. Note that as another example, the control section 200 of the outdoor control device 111 may receive, at DR service entry timing, the DR parameters 312 via the communication section 220 as in the DR entry command and write the DR parameters 312 in the storage section 210.

The DR command 313 is a parameter for an instruction associated with the DR service. The DR commands 313 include a phase, the target power consumption, and a duration. The phase is information indicating any of a DR start state and a DR end state. As the phase, "1" is set in a case where the DR entry command has been received, and "2" is set in a case where the DR withdrawal command has been received. As the target power consumption, a value transmitted from the building management device 140 together with the DR entry command is stored.

In the present embodiment, the outdoor control device 111 receives, as the DR command, the DR entry command or the DR withdrawal command and the target power consumption. Note that as another example, the building management device 140 may transmit not only the target power consumption but also the duration of the target power consumption. In this case, the DR commands 313 also include the duration. As still another example, the building management device 140 may transmit a DR preparation command before transmission of the DR entry command. In this case, the outdoor control device 111 may execute, before transition to the power adjustment mode, the protection processing of which execution is preferably avoided in the power adjustment mode. In this case, a DR preparation state is added to the phase as the DR command 313.

As still another example, the building management device 140 may transmit not only the target power consumption but also the power consumption range as a target power command. In this case, the lower and upper limits of the power consumption range received from the building management device 140 are stored as the lower power consumption limit and the upper power consumption limit as the DR parameters 312.

Returning to Fig. 2, the control section 200 has a sensor data acquisition section 201, a communication processing section 202, a mode setting section 203, an operation control section 204, a compressor control section 205, an expansion valve control section 206, an outdoor fan control section 207, and a four-way switching control section 208. Note that each of these functions is implemented in such a manner that the CPU reads and executes the program stored in the ROM or the storage section 210. As another example, at least some of these functions may be implemented using a hardware circuit.

The sensor data acquisition section 201 regularly acquires the measurement values of the sensor groups 117, 126, and stores these measurement values as the sensor data 213 in the storage section 210. Note that the sensor data acquisition section 201 acquires the measurement values of the sensor group 126 via the communication processing section 202 and the communication section 220.

The communication processing section 202 exchanges data with other types of equipment via the communication network 160. The communication processing section 202 receives, for example, information on operation of the indoor unit 120 and a setting instruction from the indoor control device 121, and stores such data in the storage section 210. Moreover, the communication processing section 202 transmits the operation information or the setting instruction to the indoor control device 121 according to an instruction provided by the processing by the operation control section 204. Further, the communication processing section 202 receives a command associated with the DR service from the building management device 140, and sets a value corresponding to the command among the DR commands 313 in the storage section 210. In addition, the communication processing section 202 transmits operation information such as a current (at the time of the processing) power consumption to the building management device 140. The mode setting section 203 sets the power mode to the normal mode or the power adjustment mode according to a command received from the building management device 140.

The compressor control section 205, the expansion valve control section 206, the outdoor fan control section 207, and the four-way switching control section 208 control, according to control by the operation control section 204, operation of the compressor 112, the outdoor expansion valve 115, the outdoor fan 114, and the four-way switching valve 116.

The operation control section 204 calculates the operation frequency of the compressor 112, the degree of opening of the outdoor expansion valve 115, the number of rotations of a motor of the outdoor fan 114 and the like and instructs operation to each type of equipment. Accordingly, the air-conditioning operation is implemented according to a setting corresponding to the user operation. Further, the operation control section 204 controls, after DR service entry, the power consumption according to the requirement of the DR service while controlling the air-conditioning operation.

Specifically, in a case where the power mode is set to the normal mode, the operation control section 204 performs, with reference to the normal mode parameters 211, the control of performing the air-conditioning operation (the normal operation) according to the setting corresponding to the user operation. In a case where the power mode is set to the power adjustment mode, the operation control section 204 performs, with reference to the power adjustment mode parameters 212, the control of performing the air-conditioning operation (the power adjustment operation) according to the requirement of the DR service.

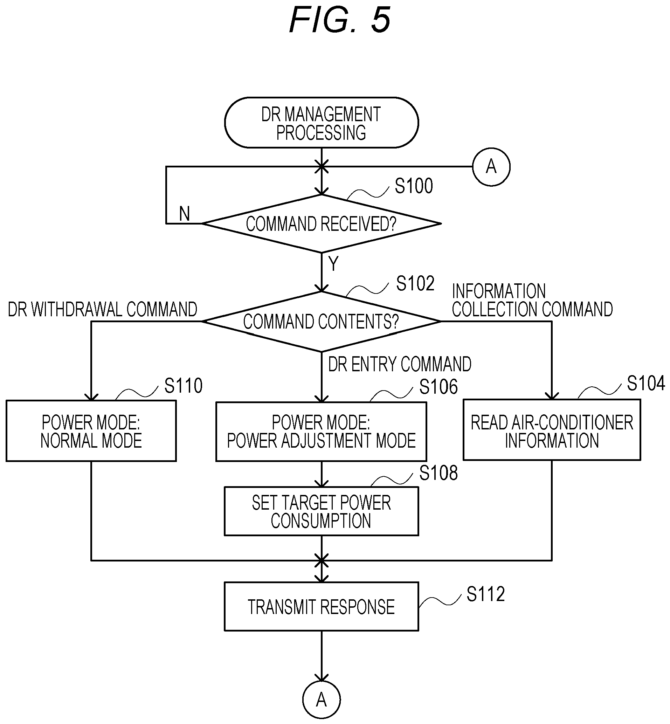

Fig. 5 is a flowchart showing DR management processing by the outdoor control device 111. The DR management processing is the processing of performing management according to a command associated with the DR service from the building management device 140. The DR management processing is processing to be started in a case where the air-conditioner 100 is started up and the communication section 220 starts communicating with the building management device 140.

The communication processing section 202 stands by until the communication processing section 202 receives the DR command from the building management device 140 (N at a step S100). When receiving the command (Y at the step S100), the mode setting section 203 checks command contents (a step S102). In a case where the command contents indicate an information collection command (INFORMATION COLLECTION COMMAND at the step S102), the mode setting section 203 reads air-conditioner information from the storage section 210 (a step S104). At this point, the air-conditioner information is information indicating the operation state and power consumption of the air-conditioner 100 at a current point (at the time of the processing). Next, the communication processing section 202 transmits, as a response to the command, the air-conditioner information to the building management device 140 (a step S112). Thereafter, the communication processing section 202 proceeds the processing to the step S100, and stands by again until a command is acquired.

At the step S102, in a case where the command contents indicate the DR entry command (DR ENTRY COMMAND at the step S102), the mode setting section 203 sets the power mode to the power adjustment mode (a step S106). When the power adjustment mode is set, the operation control section 204 starts the power adjustment operation. Note that the processing by the operation control section 204 will be described later in detail. Next, the mode setting section 203 sets the target power consumption (a step S108). Specifically, the mode setting section 203 writes the target power consumption notified together with the DR entry command from the building management device 140 as the value of the target power consumption as the DR command 313 of the power adjustment mode parameters 212. Next, the communication processing section 202 transmits, as a response to the command, a processing result to the building management device 140 (the step S112).

Note that in some cases, the communication processing section 202 receives the DR entry command when the power mode is set to the power adjustment mode. In this case, the mode setting section 203 interprets such a situation as a target power consumption change command, and skips the processing at the step S106 and updates the value of the target power consumption as the DR command 313 to the value of the target power consumption notified from the building management device 140 at the step S108.

At the step S102, in a case where the command contents indicate the DR withdrawal command (DR WITHDRAWAL COMMAND at the step S102), the mode setting section 203 sets the power mode to the normal mode (a step S110). Next, the communication processing section 202 transmits, as a response to the command, a processing result to the building management device 140 (the step S112).

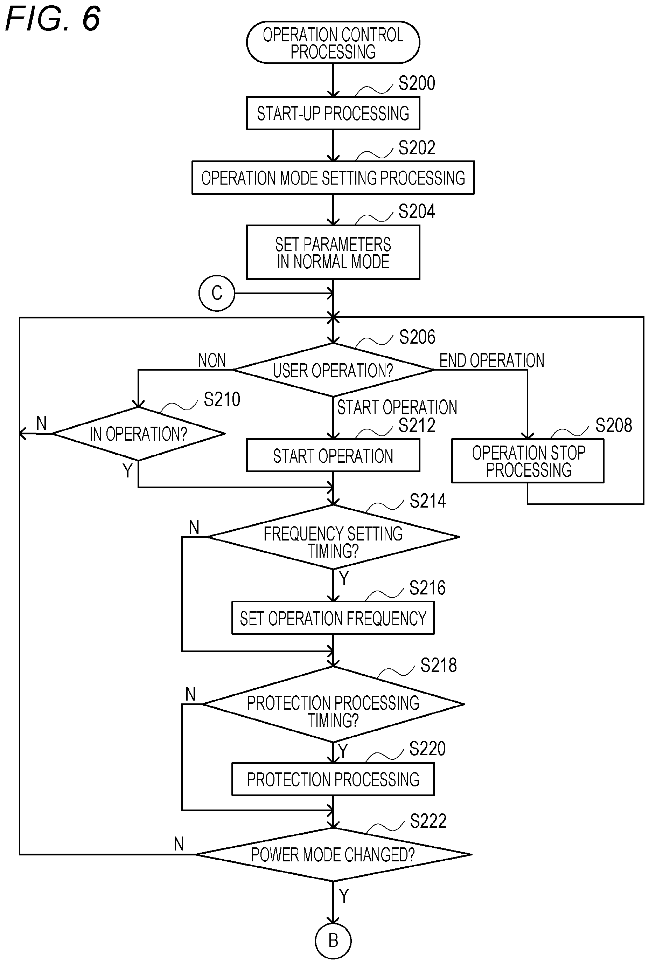

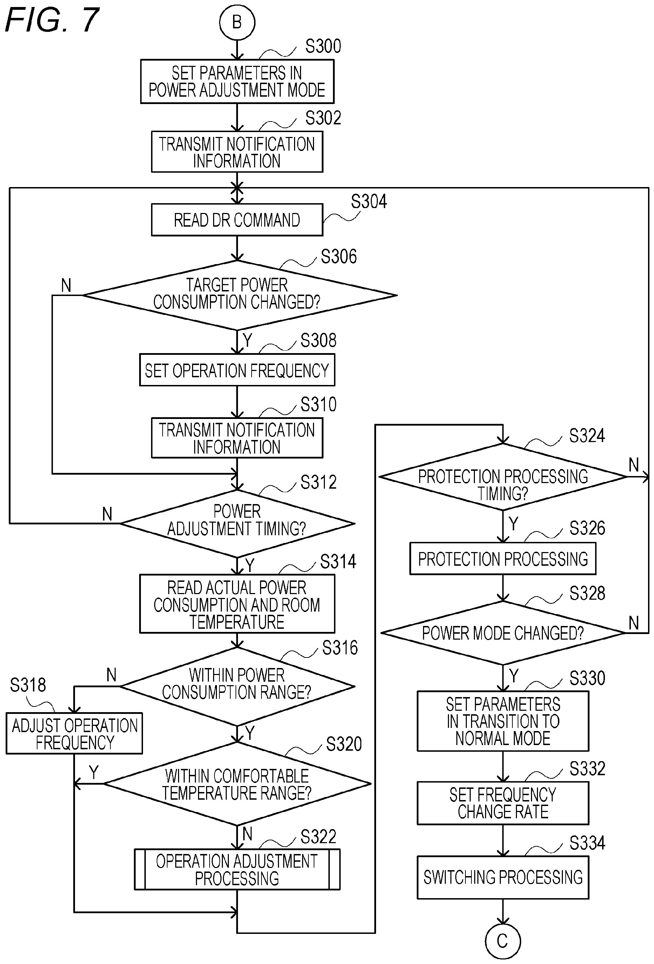

Figs. 6 and 7 are flowcharts showing operation control processing by the outdoor control device 111. The operation control processing is the processing of controlling the air-conditioning operation. The operation control processing is processing to be started in a case where the air-conditioner 100 is started up.

The control section 200 first performs start-up processing (a step S200). The start-up processing described herein is the processing of initializing and starting up each processing section. Specifically, the sensor data acquisition section 201 reads the measurement values of the sensor groups 117, 126 in every ten seconds, and starts the processing of writing these measurement values as the sensor data 213 in the storage section 210. The communication processing section 202 starts communicating with the indoor control device 121 to regularly receive the measurement values of the sensor group 126 from the indoor control device 121 and write these values as the sensor data 213. The sensor data 213 includes at least the power consumption of the compressor 112 and the room temperature. Further, the communication processing section 202 receives a set value from the indoor unit 120 every time the setting corresponding to the user operation is made via the remote controller 130, and writes such a set value as the user setting data 214 in the storage section 210. Accordingly, the control section 200 regularly reads the sensor data 213 and the user setting data 214 from the storage section 210, thereby constantly acquiring the sensor measurement values and set values of the entirety of the air-conditioning system 10.

Next, the operation control section 204 sets the operation mode (a step S202). Specifically, the operation control section 204 sets the operation mode to the air-cooling mode or the air-heating mode according to the user setting data 214, and switches the four-way switching valve 116 according to the set operation mode to switch a heat exchange cycle direction. Next, the mode setting section 203 sets the power mode to the normal mode. Then, the operation control section 204 reads the normal mode parameters 211 from the storage section 210, and sets these parameters as parameters to be referred in operation (a step S204). By the above-described processing, preparation for the air-cooling/heating operation (the air-conditioning operation) in the normal mode according to the user setting is completed, and the processing stands by for an operation start instruction from the user (a step S206).

In a case where the communication processing section 202 has received the operation start instruction from the indoor unit 120 according to the user operation (START OPERATION at the step S206), the operation control section 204 starts the air-conditioning operation and starts up a heat exchange cycle (a step S212). That is, the operation control section 204 starts the normal operation, and starts operating the compressor 112 with a start-up frequency via the compressor control section 205. Further, the operation control section 204 starts controlling the outdoor expansion valve 115 and the outdoor fan 114 via the expansion valve control section 206 and the outdoor fan control section 207. Basically, the operation control section 204 calculates an operation frequency for generating a proper air-cooling/heating capacity based on a difference between the set temperature and the room temperature, and operates the compressor 112 with the calculated operation frequency. In this manner, air-conditioning control is implemented.

Next, the operation control section 204 determines whether or not frequency setting time has come (a step S214). The frequency setting timing described herein is timing at a lapse of a predetermined waiting time from the previous frequency setting timing. The waiting time described herein is one minute, for example. Note that in a case where the frequency setting timing has never come after the start of operation, timing at a lapse of the waiting time from the start of operation is the frequency setting timing. In a case where the frequency setting timing does not come (N at the step S214), the operation control section 204 proceeds the processing to a step S218.

In a case where the frequency setting timing has come (Y at the step S214), the operation control section 204 reads the sensor data 213 and the user setting data 214. Then, the operation control section 204 calculates the operation frequency of the compressor 112 again based on such information, and sets such an operation frequency as a new set value (a step S216). During the air-conditioning operation, the room temperature changes every second, and the user also changes the set temperature as necessary. For this reason, the operation control section 204 regularly sets the operation frequency every time the frequency setting timing has come, as described above. Note that in a case where the operation frequency has been changed, the operation control section 204 performs the control of changing the operation frequency of the compressor 112 according to the compressor operation frequency change rate, which has been read at the step S204, in the normal mode.

After the processing at the step S216, the operation control section 204 determines whether or not protection processing timing has come (the step S218). The protection processing timing described herein is the timing of performing the oil tempering processing and the timing of performing the defrosting processing. The timing of performing the oil tempering processing is timing at a lapse of the value of the oil tempering interval as the operation parameter 301 of the normal mode parameters 211 from the timing of starting the previous oil tempering processing. Note that in a case where the oil tempering processing has not been performed after the start of the air-conditioning operation of the air-conditioner 100, the starting point of the oil tempering interval is the timing of starting the air-conditioning operation. Similarly, the timing of performing the defrosting processing is timing at a lapse of the value of the defrosting interval as the operation parameter 301 from the timing of starting the previous defrosting processing. In a case where the defrosting processing has not been performed after the start of the air-conditioning operation, the starting point of the defrosting interval is the timing of starting the air-conditioning operation.

In a case where the protection processing timing does not come (N at the step S218), the operation control section 204 proceeds the processing to a step S222. In a case where the protection processing timing has come (Y at the step S218), the operation control section 204 performs the protection processing (a step S220). Specifically, in the case of the timing of performing the oil tempering processing, the operation control section 204 performs the oil tempering processing. In the case of the timing of performing the defrosting processing, the operation control section 204 performs the defrosting processing. In such protection processing, the compressor 112 is temporarily operated with the special frequency (a higher frequency than that in the case of not performing the protection processing).

Next, the operation control section 204 determines whether or not the power mode has been changed by the mode setting section 203 (the step S222). In a case where the power mode is not changed (N at the step S222), the operation control section 204 proceeds the processing to the step S206. In a case where the power mode has been changed from the normal mode to the power adjustment mode (Y at the step S222), the operation control section 204 proceeds the processing to a step S300 shown in Fig. 7. Note that as described above, the power mode is changed to the power adjustment mode in a case where the DR entry command has been received.

At the step S206, in a case where the communication processing section 202 has received an operation end instruction from the indoor unit 120 (END OPERATION at the step S206), the operation control section 204 performs operation stop processing (a step S208), and thereafter, proceeds the processing to the step S206. At the step S206, in a case where the communication processing section 202 does not receive the instruction (NONE at the step S206), the operation control section 204 determines whether or not operation is being performed (a step S210). Then, in a case where operation is being performed (Y at the step S210), the operation control section 204 proceeds the processing to the step S214. In a case where operation is not being performed (N at the step S210), the operation control section 204 proceeds the processing to the step S206.

At the step S300 shown in Fig. 7, the operation control section 204 reads the operation parameters 311 of the power adjustment mode parameters 212 from the storage section 210, and sets the operation parameters 311 as parameters to be referred in the air-conditioning operation. Accordingly, the compressor frequency change rate is changed to a value smaller than the compressor frequency change rate in the normal mode. Moreover, the oil tempering interval and the defrosting interval are changed to periods longer than the intervals in the normal mode. Further, the operation control section 204 sets a temperature in the power adjustment operation (automatic operation) to the indoor unit 120 in operation. Specifically, in a case where the air-cooling operation has been set, the operation control section 204 sets the upper temperature limit of a settable temperature range of the air-conditioner 100. In a case where the air-heating operation has been set, the operation control section 204 sets the lower temperature limit of the settable temperature range. Then, the operation control section 204 starts the power adjustment operation, and performs the control of uniformly distributing refrigerant according to the operation frequency of the compressor 112.

In a case where the instruction corresponding to the user operation has been received while the power adjustment mode is set, the operation control section 204 performs such control that the processing corresponding to the instruction is not performed. Specifically, even in a case where, e.g., processing has been instructed according to an instruction for changing the set temperature or turning on/off the indoor unit 120 according to the user operation, the operation control section 204 performs such control that the processing is not performed.

Note that as another example, the operation control section 204 may suspend the processing corresponding to the instruction received while the power adjustment mode is set and may execute such processing after the normal mode has been set.

Next, the operation control section 204 transmits notification information to the indoor unit 120 via the communication section 220 (a step S302). The notification information is transmitted to the remote controller 130 by the indoor control device 121 of the indoor unit 120, and is displayed on a liquid crystal screen of the remote controller 130. In this case, the control section 200 functions as a display processing section configured to display the notification information on the liquid crystal screen of the remote controller 130 as a display section. The notification information described herein is information indicating a state in which power is being adjusted and the target power consumption. Note that it may only be required that the notification information is information indicating at least one of the state in which the power is being adjusted or the target power consumption.

Next, the operation control section 204 reads the target power consumption as the DR command 313 of the power adjustment mode parameters 212 from the storage section 210 (a step S304). Next, the operation control section 204 determines whether or not the read target power consumption has been changed from the target power consumption read at the previous step S304 (a step S306). Note that in a case where the step S304 is initially executed after the power adjustment mode has been set, the operation control section 204 determines that the target power consumption is not changed.

In a case where the target power consumption is not changed (N at the step S306), the operation control section 204 proceeds the processing to a step S312. In a case where the target power consumption has been changed (Y at the step S306), the operation control section 204 sets the operation frequency of the compressor 112 based on the changed target power consumption (a step S308). Specifically, the operation control section 204 calculates the operation frequency of the compressor 112 according to (Expression 1), sets the calculated frequency as the operation frequency of the compressor 112, and performs the control of operating the compressor 112 with the set operation frequency.

$$\text{Operation Frequency} = (\text{Target Power Consumption} \times a) - (\text{Operated Indoor}$$

$$\text{Unit Number} \times b) \dots (\text{Expression 1})$$

In this expression, a and b are constants unique to the air-conditioner 100, and are set in advance to the outdoor control device 111. Note that a and b can be learnt from a relationship among an operation frequency (a set value) in the normal operation, an actual frequency, and an actual air-conditioning power consumption.

Note that the operation control section 204 performs the control of changing the operation frequency of the compressor 112 according to the compressor frequency change rate, which has been set at the step S300, in the power adjustment mode. The compressor frequency change rate in the power adjustment mode is lower than the compressor frequency change rate in the normal mode. Thus, in the power adjustment mode, fluctuation in the power consumption can be suppressed smaller than that in the normal mode even in a case where the compressor frequency change rate has been changed.

Next, the operation control section 204 transmits the notification information indicating the changed target power consumption to the indoor unit 120 via the communication section 220 (a step S310). When receiving the notification information, the indoor control device 121 updates the target power consumption displayed on the liquid crystal screen of the remote controller 130 to the changed target power consumption.

Next, the operation control section 204 determines whether or not power adjustment timing has come (the step S312). The power adjustment timing described herein is timing at a lapse of a predetermined waiting time from the previous power adjustment timing. The waiting time described herein is 30 seconds, for example. Note that in a case where the power adjustment timing has never come after the power adjustment mode had been set, timing at a lapse of the waiting time from the timing of setting the power adjustment mode is the power adjustment timing.

In a case where the power adjustment timing does not come (N at the step S312), the operation control section 204 proceeds the processing to the step S304. On the other hand, in a case where the power adjustment timing has come (Y at the step S312), the operation control section 204 performs processing after a step S314 to check whether or not the actual power consumption has reached the target power consumption, for example. The operation frequency of the compressor 112 is set at the step S308, but it is necessary to check whether or not the actual power consumption of the air-conditioner 100 has reached the target power consumption. Further, the operation capacity of the air-conditioner 100 is limited for achieving the target power consumption, and for this reason, there is a probability that user comfortability is degraded. Thus, the operation frequency of the compressor 112 and the temperature in the room as the air-conditioning target space need to be regularly adjusted.

That is, the operation control section 204 first reads the actual power consumption of the compressor 112 and the room temperature, the actual power consumption and the room temperature being stored as the sensor data 213 in the storage section 210 (the step S314). Next, the operation control section 204 determines whether or not the actual power consumption is within the power consumption range (a step S316). The lower limit (the lower power consumption limit) and the upper limit (the upper power consumption limit) of the power consumption range are stored as the DR parameters 312 in the storage section 210.

In a case where the actual power consumption is not within the power consumption range (N at the step S316), the operation control section 204 adjusts the operation frequency of the compressor 112 (a step S318). Specifically, the operation control section 204 obtains a frequency (an adjustment frequency) to be adjusted according to (Expression 2).

$$\text{Adjustment Frequency} = \text{Out-of-Range Power Consumption} \times c \dots$$

$$\text{(Expression 2)}$$

In this expression, c is a preset value which is a constant unique to the air-conditioner 100. The out-of-range power consumption is a difference between the actual power consumption and the power consumption range. In a case where the actual power consumption is a value greater than the upper limit of the power consumption range, the out-of-range power consumption is a difference between the actual power consumption and the upper limit. In a case where the actual power consumption is a value smaller than the lower limit of the power consumption range, the out-of-range power consumption is a difference between the lower limit of the power consumption range and the actual power consumption.

In a case where the actual power consumption is a value greater than the upper limit of the power consumption range, the operation control section 204 sets, as a new operation frequency of the compressor 112, a value obtained by subtraction of the adjustment frequency from the operation frequency at the time of the processing. In a case where the actual power consumption is a value smaller than the lower limit of the power consumption range, the operation control section 204 sets, as the new operation frequency of the compressor 112, a value obtained by addition of the adjustment frequency to the operation frequency at the time of the processing. In this manner, the operation control section 204 adjusts the actual power consumption to within the power consumption range (the target power consumption error range). As described above, the operation control section 204 of the present embodiment can control not only the upper limit but also the lower limit of the actual power consumption. Thereafter, the operation control section 204 proceeds the processing to a step S324.

At the step S316, in a case where the actual power consumption is within the power consumption range (Y at the step S316), the operation control section 204 determines whether or not the room temperature is within the comfortable temperature range (a step S320). The lower limit (the lower comfortable temperature limit) and the upper limit (the upper comfortable temperature limit) of the comfortable temperature range are stored as the DR parameters 312 in the storage section 210. In a case where the room temperature is within the comfortable temperature range (Y at the step S320), the operation control section 204 proceeds the processing to the step S324. In a case where the room temperature is not within the comfortable temperature range (N at the step S320), the operation control section 204 performs power adjustment processing (a step S322). The power adjustment processing is the processing of controlling the air-conditioning operation to be performed within a range not exceeding the power consumption range.

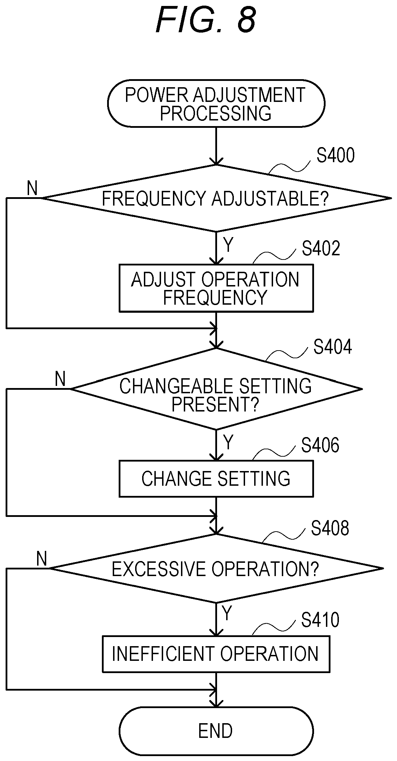

Fig. 8 is a flowchart showing detailed processing in the power adjustment processing. The operation control section 204 determines whether or not the operation frequency set to the compressor 112 is adjustable (a step S400). In a case where the operation frequency is not adjustable (N at the step S400), the operation control section 204 proceeds the processing to a step S404. In a case where the operation frequency is adjustable (Y at the step S400), the operation control section 204 adjusts the operation frequency of the compressor 112 (a step S402).

Specifically, it is assumed that the room temperature is higher than the comfortable temperature range in the air-cooling operation. In this case, when the operation frequency of the compressor 112 is a value lower than a frequency corresponding to the upper power consumption limit, the operation frequency can be adjusted to a higher value. Thus, the operation control section 204 determines as adjustable in a case where the room temperature is higher than the comfortable temperature range and the operation frequency is a value lower than the operation frequency corresponding to the upper power consumption limit in the air-cooling operation. In this case, the operation control section 204 adjusts the operation frequency such that the operation frequency increases to the frequency corresponding to the upper power consumption limit.

It is assumed that the room temperature is lower than the comfortable temperature range in the air-cooling operation. In this case, when the operation frequency of the compressor 112 is a value higher than a frequency corresponding to the lower power consumption limit, the operation frequency can be adjusted to a lower value. Thus, the operation control section 204 determines as adjustable in a case where the room temperature is lower than the comfortable temperature range and the operation frequency is a value higher than the frequency corresponding to the lower power consumption limit in the air-cooling operation. The operation control section 204 adjusts the operation frequency such that the operation frequency decreases to the frequency corresponding to the lower power consumption limit.

On the other hand, the following processing is performed in the air-heating operation. That is, the operation control section 204 determines as adjustable in a case where the room temperature is higher than the comfortable temperature range and the operation frequency is a value higher than the frequency corresponding to the lower power consumption limit in the air-heating operation. The operation control section 204 adjusts the operation frequency such that the operation frequency decreases to the frequency corresponding to the lower power consumption limit. Moreover, the operation control section 204 determines as adjustable in a case where the room temperature is lower than the comfortable temperature range and the operation frequency is a value lower than the frequency corresponding to the upper power consumption limit in the air-heating operation. The operation control section 204 adjusts the operation frequency such that the operation frequency increases to the frequency corresponding to the upper power consumption limit.

Next, the operation control section 204 determines whether or not there is a changeable setting among settings corresponding to instructions suspended after the power adjustment mode has been set (the step S404). In a case where there is no changeable setting (N at the step S404), the operation control section 204 proceeds the processing to a step S408. In a case where there is the changeable setting (Y at the step S404), the operation control section 204 changes such a setting according to the suspended instruction (a step S406).

For example, in a case where air-cooling operation of an indoor unit A (the indoor unit 120) included in the air-conditioner 100 is excessive, if an operation start instruction for an indoor unit B (the indoor unit 120) in a stop state is suspended, the operation control section 204 starts operating the indoor unit B according to the operation start instruction. In a case where the indoor unit A lacks an air-cooling capacity, if an operation stop instruction or an instruction for switching operation to air blowing operation is suspended for the indoor unit B in operation, the operation control section 204 reflects, on the setting, the operation stop instruction or the instruction for switching operation to the air blowing operation. As described above, the operation control section 204 may change an operation state of an indoor unit other than an indoor unit corresponding to a room temperature outside the comfortable temperature range, thereby controlling the room temperature outside the comfortable temperature range such that the room temperature changes to a value within the comfortable temperature range.

In a case where air-cooling/heating is excessive, the operation control section 204 controls the direction of the louver 125 of the indoor unit 120 such that the direction changes to an upward direction with respect to that at the time of the processing. That is, the operation control section 204 controls the direction of the louver 125 such that the direction changes to a direction apart from the center of the air-conditioning target space. Specifically, the operation control section 204 transmits an instruction for controlling the louver 125 to the indoor control device 121 via the communication processing section 202. Then, the direction of the louver 125 is changed by the indoor control device 121. This can prevent wind from contacting a person, and therefore, a feeling temperature can approach the comfortable temperature. Note that the direction (angle) of the louver 125 in this case is set in advance.

Note that in a case where the room temperature is lower than the set temperature by a predetermined temperature in the air-cooling operation, the operation control section 204 determines that the air-cooling operation is excessive. Moreover, in a case where the room temperature is lower than the set temperature by a predetermined temperature in the air-heating operation, the operation control section 204 determines that the air-heating operation is excessive.

Next, after having performed the processing at the steps S400 to S406, the operation control section 204 determines again whether or not operation is excessive (the step S408). In a case where operation is not excessive (N at the step S408), the operation control section 204 ends the power adjustment processing. In a case where operation is excessive (Y at the step S408), the operation control section 204 performs the control of performing inefficient operation (a step S410). The operation control section 204 performs, as the inefficient operation control, the control of decreasing the number of rotations of the indoor fan 122, throttling the indoor expansion valve 124, and decreasing the suction pressure of the compressor 112. That is, the operation control section 204 controls the equipment such that a heat exchange amount is reduced, and in this manner, suppresses an increase in the difference between the room temperature and the set temperature. Further, the operation control section 204 performs, as the inefficient operation control, the control of throttling the outdoor expansion valve 115, decreasing the number of rotations of the outdoor fan 114, and increasing the discharge pressure of the compressor 112. That is, the operation control section 204 controls the equipment such that a pressure difference more than necessary is provided. In this manner, a condensation amount and an evaporation amount can be ensured and a cycle balance can be held while a refrigerant circulation amount and the heat exchange amount are reduced.

Note that as another example, the operation control section 204 may perform at least one of the processing of decreasing the number of rotations of the indoor fan 122, the processing of throttling the indoor expansion valve 124, the processing of decreasing the number of rotations of the outdoor fan 114, or the processing of throttling the outdoor expansion valve 115.

Returning to Fig. 7, the operation control section 204 determines, after operation adjustment processing (the step S322), whether or not the protection processing timing has come (the step S324). In a case where the protection processing timing does not come (N at the step S324), the operation control section 204 proceeds the processing to the step S304. In a case where the protection processing timing has come (Y at the step S324), the operation control section 204 performs the protection processing (a step S326). The processing at the steps S324 and S326 is similar to the processing at the steps S218 and S220 described with reference to Fig. 6. Note that in the power adjustment mode, the values as the operation parameters 311 of the power adjustment mode parameters 212 are used as the values of the oil tempering interval and the defrosting interval for determining the protection processing timing.

After the processing at the step S326, the operation control section 204 determines whether or not the power mode has been changed by the mode setting section 203 (a step S328). In a case where the power mode is not changed (N at the step S328), the operation control section 204 proceeds the processing to the step S304. In a case where the power mode has been changed from the power adjustment mode to the normal mode (Y at the step S328), the operation control section 204 sets parameters associated with transition to the normal mode (a step S330). Specifically, the operation control section 204 reads the normal mode parameters 211. Further, the operation control section 204 reads the rebound prevention period as the DR parameter 312 of the power adjustment mode parameters 212 and the setting information included in the user setting data 214 and corresponding to the user operation via the remote controller 130. Then, the operation control section 204 sets such information as parameters to be referred upon transition.

Next, the operation control section 204 sets the change rate of the frequency of the compressor 112 in the rebound prevention period (a step S332). Specifically, the operation control section 204 first calculates the operation frequency of the compressor 112 in the normal mode based on the set temperature included in the user setting data 214. Then, the operation control section 204 calculates the frequency change rate such that a difference between the calculated operation frequency and the operation frequency at the time of the processing gradually changes in the rebound prevention period. The operation control section 204 obtains, for example, x/t as the frequency change rate in a case where the difference is x and the time is t.

Next, the operation control section 204 performs switching processing (a step S334). Specifically, the operation control section 204 starts the normal operation. At this point, the operation control section 204 starts counting the rebound prevention period, and gradually changes the operation frequency of the compressor 112 according to the frequency change rate calculated at the step S332 until a lapse of the rebound prevention period. Further, the operation control section 204 switches an indication on the remote controller to a normal indication. Thereafter, the operation control section 204 proceeds the processing to the step S206 shown in Fig. 6.

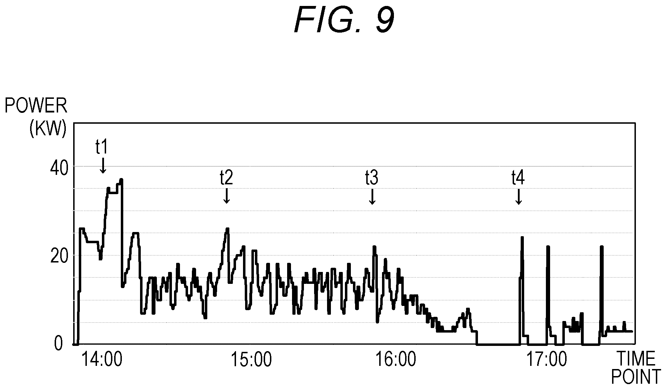

Fig. 9 is a graph showing a temporal change in the power consumption in the normal operation. The horizontal axis of the graph indicates a time point, the vertical axis of the graph indicates a power consumption. A time point t1 is the timing of starting up the air-conditioner 100, and any of time points t2 to t4 is the timing of executing the protection processing. As seen from the graph, the power consumption increases at the time of start-up and the timing of the protection processing. Further, in the normal operation, up-down fluctuation in the instantaneous power of the air-conditioner 100 is not specifically taken into consideration, and therefore, an operation amount of the compressor 112 changes according to a room temperature change and the user operation and the power consumption fluctuates up and down in an irregular manner accordingly.

Specifically, when the compressor 112 is started up or the set temperature is greatly changed, a great power is generated in a rebound manner. Upon execution of the protection processing, the compressor 112 is temporarily operated with a high frequency, and therefore, sudden instantaneous power in an impulse form is generated. When such up-down fluctuation or such a sudden great power is caused upon entry into the frequency adjustment DR service, a required target power consumption cannot be satisfied, and this might lead to a penalty. On the other hand, in the air-conditioner 100 of the present embodiment, the outdoor control device 111 can perform, upon entry into the DR service, the power adjustment operation for controlling the up-down fluctuation in the power consumption such that the fluctuation is suppressed small.

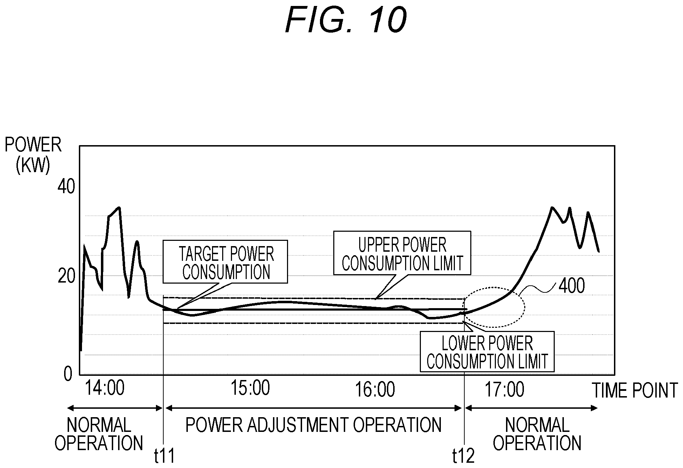

Fig. 10 is a graph showing a temporal change in the power consumption in the power adjustment operation. The horizontal axis of the graph indicates a time point, and the vertical axis of the graph indicates a power consumption. By the power adjustment operation performed during the DR service, a smooth power consumption not exceeding the power consumption range (the target power consumption error range) from the lower power consumption limit to the upper power consumption limit is maintained, the power consumption range being set with respect to the target power consumption. Further, upon withdrawal from the DR service, the operation frequency of the compressor 112 gradually changes in the rebound prevention period 400. Thus, a rapid change (rebound) in the power consumption can be prevented. As described above, the outdoor control device 111 controls not only the upper limit but also the lower limit of the power consumption in the power adjustment operation, and therefore, operation control suitable for the frequency adjustment demand response service can be performed.

As described above, the air-conditioner 100 of the present embodiment can perform, when entering into a power adjustment service program, such demand response operation control that the power consumption of the compressor 112 transitions within the error range (the power consumption range) with respect to the target power consumption. With this configuration, the air-conditioner 100 can respond not only to a request for decreasing the power consumption but also to a request for increasing the power consumption. That is, the air-conditioner 100 can limit not only the upper limit but also the lower limit of the power consumption. Further, in the air-conditioner 100 of the present embodiment, the repetition intervals of the oil tempering processing and the defrosting processing are, in the power adjustment mode, longer than the interval of each type of processing in the normal mode. Thus, the opportunity of causing fluctuation in the power consumption due to such protection processing can be reduced.

A first variation of the first embodiment will be described. The operation control section 204 of the present embodiment controls the operation frequency of the compressor 112 such that the power consumption of the compressor 112 is within the power consumption range. This is because much of the power consumption of the air-conditioner 100 is due to the compressor 112. Note that the operation control section 204 may calculate the power consumption of the entirety of the air-conditioner 100 from the measurement values of the sensor groups 117, 126, and in this case, may control the operation frequency of the compressor 112 such that the power consumption of the entirety of the air-conditioner 100 is within the power consumption range. As described above, it may only be required that the operation control section 204 controls the operation frequency of the compressor 112 based on the power consumptions of one or more types of equipment of the air-conditioner 100 including the compressor 112 and the target power consumption, and the equipment targeted for monitoring is not limited to that of the embodiment.

A second variation will be described. It may only be required that the operation control section 204 gradually changes the operation frequency to the calculated operation frequency in the rebound prevention period, and the degree of change is not limited to that of the embodiment. As another example, the operation control section 204 may change the operation frequency by two or more stages in a stepwise manner in the rebound prevention period. For example, the operation control section 204 may change 1/3 of the difference by a frequency corresponding to 1/3 of the difference in every lapse of a 1/3 period of the rebound prevention period, thereby performing the control of changing the operation frequency by the frequency corresponding to the difference at a lapse of the rebound prevention period.

A third variation will be described. The operation control section 204 may regularly transmit the actual power consumption of the compressor 112 to the indoor control device 121, thereby performing the control of displaying such a power consumption on the liquid crystal screen of the remote controller 130.

A fourth variation will be described. It may only be required that the outdoor control device 111 can set the normal mode and the power adjustment mode as the power mode, and the condition for switching the power mode to the power adjustment mode is not limited to that of the embodiment. That is, the outdoor control device 111 may set the power adjustment mode under a condition other than reception of the DR entry service. For example, the outdoor control device 111 may set the power adjustment mode according to the user operation. Further, in this case, it may only be required that the power consumption range is within a preset range. That is, it may only be required that the lower set value limit of the power consumption range is a preset value, and such a lower limit is not limited to a value corresponding to the target power consumption associated with the DR service.

In a fifth variation, the device configured to manage the air-conditioner 100 and transmit an instruction such as the DR entry command is not limited to the building management device 140. As another example, an air-conditioner central control device configured to centrally control multiple air-conditioners 100 may transmit a DR command.

(Second Embodiment)

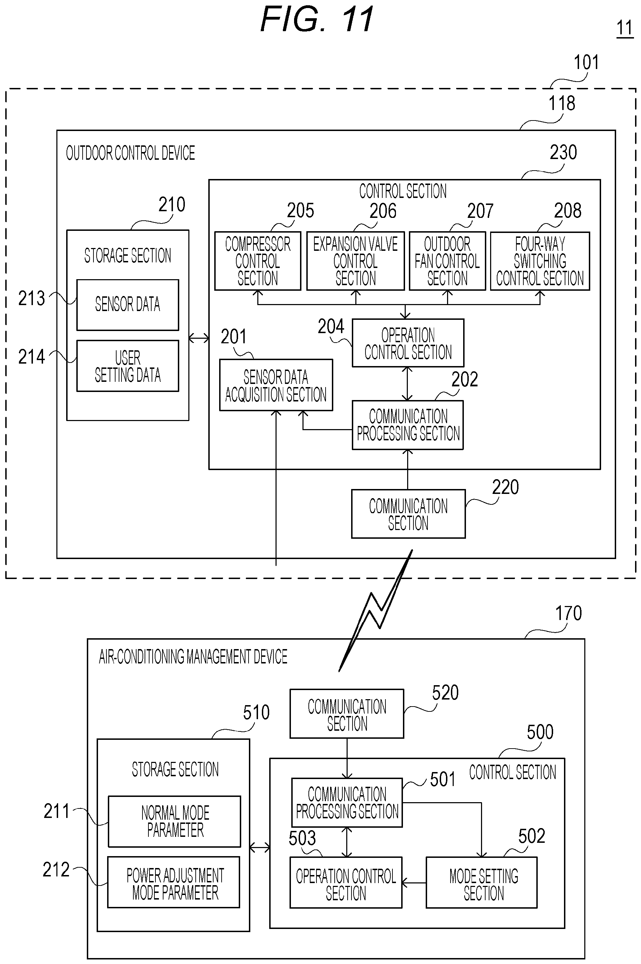

Next, differences of an air-conditioning system according to a second embodiment from the air-conditioning system 10 according to the first embodiment will be mainly described. Fig. 11 is a diagram of the entirety of an air-conditioning system 11 according to the second embodiment. The air-conditioning system 11 includes an air-conditioning management device 170 in addition to an air-conditioner 101. In the present embodiment, the air-conditioning management device 170 receives a DR command from a building management device 140, and according to the DR command, controls an outdoor unit 110 to perform power control according to a DR service.

A storage section 210 of an outdoor control device 118 of the outdoor unit of the present embodiment stores sensor data 213 and user setting data 214, but does not store normal mode parameters 211 and power adjustment mode parameters 212. Moreover, a control section 230 of the outdoor control device 118 does not include a mode setting section.

**EP 4 141 345 A1**

On the other hand, the air-conditioning management device 170 has a control section 500 having a CPU, a ROM, a RAM and the like, a storage section 510, and a communication section 520. The control section 500 executes various programs stored in the storage section 510 and the ROM, thereby controlling the entirety of the air-conditioning management device 170. The storage section 510 stores various types of data and various programs. The communication section 520 communicates with an external device via a communication network 160. The storage section 510 stores the normal mode parameters 211 and the power adjustment mode parameters 212.

The control section 500 has a communication processing section 501, a mode setting section 502, and an operation control section 503. The communication processing section 501 exchanges data with other types of equipment via the communication network 160. The communication processing section 501 receives the DR command from the building management device 140, for example. Moreover, the communication processing section 501 transmits an instruction for controlling air-conditioning operation to the outdoor control device 118. The mode setting section 502 and the operation control section 503 perform processing similar to that by the mode setting section 203 and the operation control section 204 of the outdoor control device 111 according to the first embodiment. Note that control of each type of equipment included in the outdoor unit, such as a compressor 112, according to the air-conditioning operation is implemented in such a manner that the control section 230 transmits an instruction for such control to the outdoor control device 118 and performs operation control according to the instruction.

DR management processing according to the second embodiment is executed by the operation control section 503 of the air-conditioning management device 170. The DR management processing according to the second embodiment is similar to the DR management processing described with reference to Fig. 5. Note that at the step S104, the operation control section 503 transmits an air-conditioner information transmission request to the outdoor control device 118 and acquires, as a response to such a request, air-conditioner information from the outdoor control device 118.

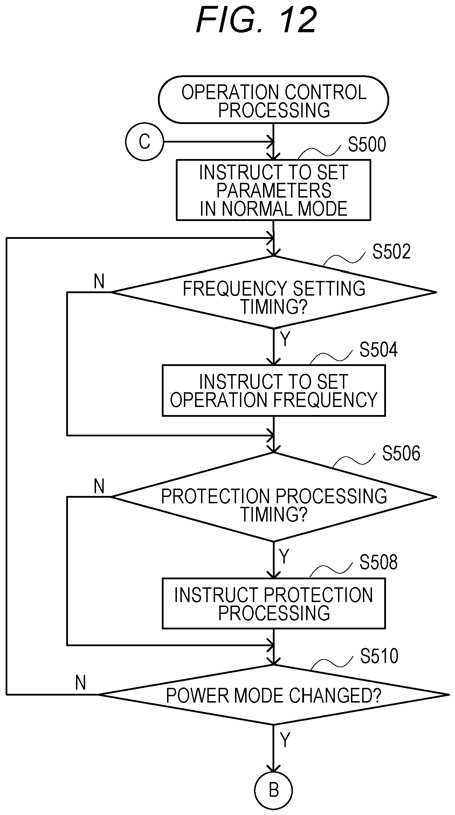

Next, operation control processing according to the second embodiment will be described with reference to Figs. 12, 7, and 8. The operation control processing is processing to be executed by the operation control section 503 of the air-conditioning management device 170. The operation control section 503 starts the operation control processing in the case of receiving an operation start notification from the air-conditioner 101, and ends the operation control processing in the case of receiving an operation end notification.

As shown in Fig. 12, when the air-conditioner 101 is started up, the operation control section 503 starts the processing of regularly receiving the sensor data 213 and the user setting data 214 of the air-conditioner 101. Then, the operation control section 204 reads the normal mode parameters 211 from the storage section 210, and as parameters to be referred in operation, transmits the normal mode parameters 211 to the outdoor control device 118 (a step S500). In this manner, in the outdoor control device 118, parameters in a normal mode are set, and normal operation is started.

Next, the operation control section 503 determines whether or not frequency setting timing has come (a step S502). The present processing is similar to the processing at the step S214 described with reference to Fig. 6. In a case where the frequency setting timing does not come (N at the step S502), the operation control section 503 proceeds the processing to a step S506. In a case where the frequency setting timing has come (Y at the step S502), the operation control section 503 calculates the operation frequency of the compressor 112 again with reference to the sensor data 213 and the user setting data 214 received from the outdoor control device 118. Then, the operation control section 503 transmits, to the outdoor control device 118, an operation frequency setting instruction for setting the calculated operation frequency as a new operation frequency (a step S504). In the outdoor control device 118, the operation control section 204 changes the operation frequency of the compressor 112 according to the received set value.

After the processing at the step S504, the operation control section 503 determines whether or not protection processing timing has come (the step S506). The present processing is similar to the processing at the step S218. In a case where the protection processing timing does not come (N at the step S506), the operation control section 503 proceeds the processing to a step S510. In a case where the protection processing timing has come (Y at the step S506), the operation control section 204 transmits, to the outdoor control device 118, a protection processing instruction for performing protection processing (a step S508). When receiving the protection processing instruction, the outdoor control device 118 performs the protection processing according to the instruction. Note that parameters in the protection processing, such as the operation frequency, are stored in the storage section 510 of the air-conditioning management device 170, and may be transmitted from the air-conditioning management device 170 to the outdoor control device 118 or be stored in the storage section 210 of the outdoor control device 118.

Next, the operation control section 503 determines whether or not a power mode has been changed by the mode setting section 502 (the step S510). In a case where the power mode is not changed (N at the step S510), the operation control section 503 proceeds the processing to the step S502. In a case where the power mode has been changed from the normal mode to a power adjustment mode (Y at the step S510), the operation control section 503 proceeds the processing to the step S300 shown in Fig. 7.

The processing by the operation control section 503 after the step S300 is similar to the processing by the operation control section 204 after the step S300 according to the first embodiment, and therefore, the processing by the operation control section 503 will be described with reference to Figs. 7 and 8. The operation control section 503

14

reads operation parameters 311 of the power adjustment mode parameters 212 from the storage section 510, and as parameters to be referred in the air-conditioning operation, transmits the operation parameters 311 to the outdoor control device 118 (the step S300). In this manner, in the outdoor control device 118, parameters in the power adjustment mode are set, and power adjustment operation is started.

Next, the operation control section 503 transmits, to the outdoor control device 118, an instruction for displaying notification information on a remote controller 130 (the step S302). Next, the operation control section 503 reads a target power consumption as a DR command 313 of the power adjustment mode parameters 212 from the storage section 510 (the step S304). Next, the operation control section 503 determines whether or not the read target power consumption has been changed from the target power consumption previously read at the step S304 (the step S306). In a case where the target power consumption is not changed (N at the step S306), the operation control section 503 proceeds the processing to the step S312. In a case where the target power consumption has been changed (Y at the step S306), the operation control section 503 calculates the operation frequency of the compressor 112 based on the changed target power consumption, and transmits an operation frequency change instruction to the outdoor control device 118 (the step S308). According to the change instruction, the outdoor control device 118 performs the control of operating the compressor 112 with the operation frequency calculated at the step S308. Note that the operation control section 503 instructs the outdoor control device 118 to change the operation frequency of the compressor 112 according to a compressor frequency change rate, which has been set at the step S300, in the power adjustment mode. The outdoor control device 118 controls the operation frequency change rate according to such an instruction.

Next, the operation control section 503 transmits, to the outdoor control device 118, the notification information indicating the changed target power consumption (the step S310). Next, the operation control section 503 determines whether or not power adjustment timing has come (the step S312). In a case where the power adjustment timing does not come (N at the step S312), the operation control section 503 proceeds the processing to the step S304. On the other hand, in a case where the power adjustment timing has come (Y at the step S312), the operation control section 503 reads the actual power consumption of the compressor 112 and a room temperature (the step S314), the actual power consumption and the room temperature being stored as the sensor data 213 in the storage section 510. Next, the operation control section 503 determines whether or not the power consumption is within a power consumption range (the step S316).

In a case where the actual power consumption is not within the power consumption range (N at the step S316), the operation control section 503 obtains an adjustment value of the operation frequency of the compressor 112, and transmits an adjustment instruction to the outdoor control device 118 (the step S318). Thereafter, the operation control section 503 proceeds the processing to the step S324. When receiving the adjustment instruction, the outdoor control device 118 adjusts the operation frequency according to the instruction.

At the step S316, in a case where the actual power consumption is within the power consumption range (Y at the step S316), the operation control section 503 determines whether or not the room temperature is within a comfortable temperature range (the step S320). In a case where the room temperature is within the comfortable temperature range (Y at the step S320), the operation control section 503 proceeds the processing to the step S324. In a case where the room temperature is not within the comfortable temperature range (N at the step S320), the operation control section 503 performs power adjustment processing (the step S322).

Next, the power adjustment processing will be described with reference to Fig. 8. The operation control section 503 determines whether or not the operation frequency set to the compressor 112 is adjustable (the step S400). In a case where the operation frequency is not adjustable (N at the step S400), the operation control section 503 proceeds the processing to the step S404. In a case where the operation frequency is adjustable (Y at the step S400), the operation control section 503 obtains the adjustment value of the operation frequency of the compressor 112, and transmits the adjustment instruction to the outdoor control device 118 (the step S402). The outdoor control device 118 adjusts the operation frequency according to the adjustment instruction.

Next, the operation control section 503 determines whether or not there is a changeable setting among settings corresponding to suspended instructions (the step S404). In a case where there is no changeable setting (N at the step S404), the operation control section 503 proceeds the processing to the step S408. In a case where there is the changeable setting (Y at the step S404), the operation control section 503 transmits, to the outdoor control device 118, a setting change instruction according to the suspended instruction (the step S406). When receiving the setting change instruction, the outdoor control device 118 changes the setting according to the instruction.

Next, after having performed the processing at the steps S400 to S406, the operation control section 503 determines again whether or not operation is excessive (the step S408). In a case where operation is not excessive (N at the step S408), the operation control section 503 ends the power adjustment processing. In a case where operation is excessive (Y at the step S408), the operation control section 503 transmits, to the outdoor control device 118, an instruction for performing inefficient operation (the step S410). When receiving the instruction for performing the inefficient operation, the outdoor control device 118 starts the inefficient operation according to the instruction.

Returning to Fig. 7, the operation control section 503 determines, after operation adjustment processing (the step S322), whether or not the protection processing timing has come (the step S324). In a case where the protection processing timing does not come (N at the step S324), the operation control section 503 proceeds the processing to the step S304. In a case where the protection processing timing has come (Y at the step S324), the operation control section 503 transmits, to the outdoor control device 118, an instruction for performing the protection processing (the step S326). When receiving the protection processing instruction, the outdoor control device 118 performs the protection processing. After the processing at the step S326, the operation control section 503 determines whether or not the power mode has been changed by the mode setting section 502 (the step S328). In a case where the power mode is not changed (N at the step S328), the operation control section 503 proceeds the processing to the step S304.

In a case where the power mode has been changed from the power adjustment mode to the normal mode (Y at the step S328), the operation control section 503 reads parameters associated with transition to the normal mode (the step S330). Next, the operation control section 503 calculates the change rate of the frequency of the compressor 112 in a rebound prevention period (the step S332). Next, the operation control section 503 transmits, to the outdoor control device 118, the parameters associated with transition to the normal mode in, e.g., the rebound prevention period and the frequency change rate (the step S334). When receiving the parameters associated with transition to the normal mode and the frequency change rate, the outdoor control device 118 performs switching processing. That is, the outdoor control device 118 gradually changes the operation frequency of the compressor 112 according to the frequency change rate during the rebound prevention period.

Note that the configurations and processing of the air-conditioning system 11 according to the second embodiment other than the above-described configurations and processing are similar to the configurations and processing of the air-conditioning system 10 according to the first embodiment.

A first variation of the second embodiment will be described. It may only be required that the air-conditioning management device 170 performs at least some types of processing described in the second embodiment among the processing associated with the control of the power consumption, and in this case, the remaining types of processing may be performed by the outdoor control device 118. Of the operation control processing of the second embodiment, at least one of the processing (the steps S214, S216) associated with the frequency setting, the processing (the steps S218, S220) associated with the protection processing, or the processing (the steps S312, S314) associated with the power adjustment timing may be executed by the outdoor control device 118, for example.

The normal mode parameters 211 and the operation parameters 311 of the power adjustment mode parameters 212 may be stored in the outdoor control device 118 instead of the air-conditioning management device 170. In this case, in a case where the power mode has been switched, the operation control section 204 may refer to the parameters stored in the storage section 210 of the outdoor control device 118.

In a second variation, in a case where the air-conditioning management device 170 manages the multiple air-conditioners, i.e., multiple compressors, the air-conditioning management device 170 may determine the target power consumption of each compressor from the target power consumption, and may control the operation frequency of each compressor according to the target power consumption.

In a third variation, the building management device 140 may perform, instead of the air-conditioning management device 170, the processing to be executed by the air-conditioning management device 170 as described in the second embodiment.

Note that the present invention is not limited to these specific embodiments, and various modifications/changes such as application of a variation of a certain embodiment to another embodiment can be made within the scope of the gist of the present invention described in the claims.

The control device of the air-conditioner of the present invention has been described in detail with reference to the above-described embodiments, but the present invention is not limited to the above-described embodiments. Other embodiments, addition, changes, omissions or the like can be made within a scope that those skilled in the art can arrive at, and any aspect is included in the scope of the present invention as long as the features/advantageous effects of the present invention are provided. Thus, a program product such as a recording medium recording the above-described programs is also included in the scope of the present invention.

LIST OF REFERENCE SIGNS

| | |
|---|---|
| 10, 11 | Air-Conditioning System |
| 100, 101 | Air-Conditioner |
| 110 | Outdoor Unit |
| 111, 118 | Outdoor Control Device |
| 120 | Indoor Unit |
| 160 | Building Management Device |

| | |
|---|---|
| 170 | Air-Conditioning Management Device |
| 200, 230 | Control Section |
| 203 | Mode Setting Section |
| 204 | Operation Control Section |
| 210 | Storage Section |
| 220 | Communication Section |
| 302 | Mode Setting Section |
| 303 | Operation Control Section |

**Claims**

1. An air-conditioner comprising:

   a compressor;
   an outdoor heat exchanger;
   an expansion mechanism;
   an indoor heat exchanger; and
   an operation control section configured to control an operation frequency of the compressor such that a power consumption of the air-conditioner or the compressor reaches a value greater than a lower set value limit.

2. The air-conditioner according to claim 1, further comprising:
   a mode setting section configured to set a power mode of the air-conditioner to a power adjustment mode for controlling the operation frequency of the compressor such that the power consumption of the air-conditioner or the compressor reaches the value greater than the lower set value limit or a normal mode for controlling the operation frequency of the compressor according to an air-conditioning operation set value corresponding to user operation.

3. The air-conditioner according to claim 2, further comprising:

   a communication processing section configured to receive a power adjustment command from an external device,
   wherein the mode setting section sets the power adjustment mode in a case where the power adjustment command is received in the normal mode.

4. The air-conditioner according to claim 2 or 3, wherein
   the operation control section controls the operation frequency to gradually change from the operation frequency set in the power adjustment mode to the operation frequency set in the normal mode in a preset period in a case where the power adjustment mode is changed to the normal mode.

5. The air-conditioner according to any one of claims 2 to 4, further comprising:
   a display processing section configured to display notification information notifying that power is being adjusted on a display section in a case where the power adjustment mode is set.

6. The air-conditioner according to claim 3, wherein

   the power adjustment command includes a target power consumption, and
   a display processing section is further provided, which is configured to display the target power consumption on a display section in a case where the power adjustment mode is set.

7. The air-conditioner according to any one of claims 2 to 6, wherein
   in a case where the power adjustment mode is set, the operation control section performs oil tempering processing with a period longer than that in a case where the normal mode is set.

8. The air-conditioner according to any one of claims 2 to 7, wherein
   in a case where the power adjustment mode is set, the operation control section performs defrosting processing with a period longer than that in a case where the normal mode is set.

9. The air-conditioner according to any one of claims 2 to 8, wherein

in a case where an instruction associated with operation of the compressor is received by the user operation in the power adjustment mode, the operation control section performs such control that processing corresponding to the instruction is not performed.

10. The air-conditioner according to claim 9, wherein
in a case where the power adjustment mode is changed to the normal mode in a state in which the processing corresponding to the instruction is not performed, the operation control section performs the processing corresponding to the instruction.

11. The air-conditioner according to any one of claims 2 to 10, wherein
the operation control section changes a direction of an indoor fan to an upward direction in a case where the power adjustment mode is set.

12. The air-conditioner according to any one of claims 2 to 11, wherein
in a case where an air-conditioning target space temperature exceeds a comfortable temperature range in the power adjustment mode, the operation control section performs a control of performing at least one of a processing of throttling the expansion mechanism, a processing of decreasing the number of rotations of an outdoor fan, or a processing of decreasing the number of rotations of the indoor fan.

13. A management device comprising:
an operation control section configured to control an operation frequency of a compressor such that a power consumption of an air-conditioner including the compressor, an outdoor heat exchanger, an expansion mechanism, and an indoor heat exchanger or a power consumption of the compressor reaches a value greater than a lower set value limit.

# FIG. 1

<u>10</u>

# FIG. 2

110

**OUTDOOR CONTROL DEVICE**

200

STORAGE SECTION 210

CONTROL SECTION

211 — NORMAL MODE PARAMETER

212 — POWER ADJUSTMENT MODE PARAMETER

213 — SENSOR DATA

214 — USER SETTING DATA

205 — COMPRESSOR CONTROL SECTION

206 — EXPANSION VALVE CONTROL SECTION

207 — OUTDOOR FAN CONTROL SECTION

208 — FOUR-WAY SWITCHING CONTROL SECTION

201 — SENSOR DATA ACQUISITION SECTION

204 — OPERATION CONTROL SECTION

203 — MODE SETTING SECTION

202 — COMMUNICATION PROCESSING SECTION

220 — COMMUNICATION SECTION

# FIG. 3

211

**NORMAL MODE PARAMETER**

301

OPERATION PARAMETER

| No | ITEM | VALUE |
|---|---|---|
| 1 | COMPRESSOR FREQUENCY CHANGE RATE | 1Hz/s |
| 2 | OIL TEMPERING INTERVAL | 60 MINUTES |
| 3 | DEFROSTING INTERVAL | AIR-COOLING: NONE, AIR-HEATING: 60 MINUTES |
| ... | ... | ... |

# FIG. 4

212

POWER ADJUSTMENT MODE PARAMETER

311

OPERATION PARAMETER

| No | ITEM | VALUE |
|---|---|---|
| 1 | COMPRESSOR FREQUENCY CHANGE RATE | 0.5Hz/s |
| 2 | OIL TEMPERING INTERVAL | 150 MINUTES |
| 3 | DEFROSTING INTERVAL | AIR-COOLING: NONE, AIR-HEATING: 120 MINUTES |
| ... | ... | ... |

312

DR PARAMETER

| No | ITEM | VALUE |
|---|---|---|
| 1 | LOWER POWER CONSUMPTION LIMIT | TARGET POWER CONSUMPTION*0.9 |
| 2 | UPPER POWER CONSUMPTION LIMIT | TARGET POWER CONSUMPTION*1.1 |
| 3 | LOWER COMFORTABLE TEMPERATURE LIMIT | AIR-COOLING: 27°C, AIR-HEATING: 23°C |
| 4 | UPPER COMFORTABLE TEMPERATURE LIMIT | AIR-COOLING: 29°C, AIR-HEATING: 25°C |
| 5 | REBOUND PREVENTION PERIOD | 3 MINUTES |
| ... | ... | ... |

313

DR COMMAND

| No | ITEM | VALUE |
|---|---|---|
| 1 | PHASE | 1: DR START, 2: DR END |
| 2 | TARGET POWER CONSUMPTION | 20kw |
| ... | ... | ... |

# FIG. 5

```
        ┌──────────────────────┐
        │    DR MANAGEMENT     │
        │     PROCESSING      │
        └──────────────────────┘
                    │
                    ╳──────────────────────────────( A )
                    │          S100
              ┌─────────────────────┐
         N ───│  COMMAND RECEIVED?  │
              └─────────────────────┘
                    │ Y
                    │          S102
                    │                    INFORMATION
  DR WITHDRAWAL COMMAND  ┌──────────────────┐  COLLECTION COMMAND
  ┌─────────────────────│ COMMAND CONTENTS? │─────────────────────┐
  │                     └──────────────────┘                      │
  │                      DR ENTRY COMMAND                          │
  │  S110                    │  S106                         S104  │
┌───────────────┐  ┌──────────────────────┐  ┌──────────────────────┐
│  POWER MODE:  │  │     POWER MODE:      │  │  READ AIR-CONDITIONER │
│ NORMAL MODE   │  │ POWER ADJUSTMENT MODE│  │     INFORMATION      │
└───────────────┘  └──────────────────────┘  └──────────────────────┘
  │                          │  S108                         │
  │                ┌──────────────────────┐                  │
  │                │  SET TARGET POWER    │                  │
  │                │    CONSUMPTION       │                  │
  │                └──────────────────────┘                  │
  │                          │                               │
  └──────────────────────────╳───────────────────────────────┘
                             │
                  ┌──────────────────────┐
                  │  TRANSMIT RESPONSE   │   S112
                  └──────────────────────┘
                             │
                           ( A )
```

# FIG. 6

OPERATION CONTROL
PROCESSING

↓ S200

START-UP PROCESSING

↓ S202

OPERATION MODE SETTING PROCESSING

↓ S204

SET PARAMETERS
IN NORMAL MODE

C →

S206
USER OPERATION?
NON ← | END OPERATION →
START OPERATION ↓

S210
IN OPERATION?
N ← | Y

S212
START OPERATION

S208
OPERATION STOP
PROCESSING

↓ S214
FREQUENCY SETTING
TIMING?
N ← | Y ↓

S216
SET OPERATION FREQUENCY

↓ S218
PROTECTION PROCESSING
TIMING?
N ← | Y ↓

S220
PROTECTION PROCESSING

↓ S222
POWER MODE CHANGED?
N ← | Y ↓

B

FIG. 7

(B)

S300
SET PARAMETERS IN
POWER ADJUSTMENT MODE

S302
TRANSMIT NOTIFICATION
INFORMATION

S304
READ DR COMMAND

S306
TARGET POWER
CONSUMPTION CHANGED? — N

S308 Y
SET OPERATION FREQUENCY

S310
TRANSMIT NOTIFICATION
INFORMATION

S312
POWER
ADJUSTMENT TIMING? — N

S314 Y
READ ACTUAL POWER
CONSUMPTION AND ROOM
TEMPERATURE

S316
WITHIN POWER
CONSUMPTION RANGE? — N

S318
ADJUST OPERATION
FREQUENCY

S320 Y
WITHIN COMFORTABLE
TEMPERATURE RANGE? — Y

S322 N
OPERATION ADJUSTMENT
PROCESSING

S324
PROTECTION PROCESSING
TIMING? — N

S326 Y
PROTECTION PROCESSING

S328
POWER MODE CHANGED? — N

S330 Y
SET PARAMETERS
IN TRANSITION TO
NORMAL MODE

S332
SET FREQUENCY
CHANGE RATE

S334
SWITCHING PROCESSING

(C)

# FIG. 8

```
        ┌─────────────────────┐
        │  POWER ADJUSTMENT   │
        │     PROCESSING      │
        └─────────────────────┘
                   │
                   │              S400
              ◇─────────────────────────◇
         N    │   FREQUENCY ADJUSTABLE?  │
        ┌─────◇─────────────────────────◇
        │              │ Y       S402
        │     ┌─────────────────────┐
        │     │  ADJUST OPERATION   │
        │     │     FREQUENCY       │
        │     └─────────────────────┘
        │              │
        └──────────────┤         S404
              ◇─────────────────────────◇
         N    │  CHANGEABLE SETTING     │
        ┌─────◇      PRESENT?           ◇
        │     ◇─────────────────────────◇
        │              │ Y       S406
        │     ┌─────────────────────┐
        │     │   CHANGE SETTING    │
        │     └─────────────────────┘
        │              │
        └──────────────┤         S408
              ◇─────────────────────────◇
         N    │   EXCESSIVE OPERATION?  │
        ┌─────◇─────────────────────────◇
        │              │ Y       S410
        │     ┌─────────────────────┐
        │     │ INEFFICIENT OPERATION│
        │     └─────────────────────┘
        │              │
        └──────────────┤
            ┌─────────────────────┐
            │         END         │
            └─────────────────────┘
```

## FIG. 9

*FIG. 10*

# FIG. 11

## FIG. 12

```
        ┌─────────────────────┐
        │ OPERATION CONTROL   │
        │    PROCESSING       │
        └─────────────────────┘
  ⊙C ──────────┐ S500
               ▼
     ┌─────────────────────┐
     │  INSTRUCT TO SET    │
     │    PARAMETERS       │
     │   IN NORMAL MODE    │
     └─────────────────────┘
               │
               ▼ S502
    N ◀── ◇ FREQUENCY SETTING
           │    TIMING?
           │ Y
           ▼ S504
     ┌─────────────────────┐
     │   INSTRUCT TO SET   │
     │ OPERATION FREQUENCY │
     └─────────────────────┘
               ▼ S506
    N ◀── ◇ PROTECTION PROCESSING
           │     TIMING?
           │ Y
           ▼ S508
     ┌─────────────────────┐
     │ INSTRUCT PROTECTION │
     │     PROCESSING      │
     └─────────────────────┘
               ▼ S510
    N ◀── ◇ POWER MODE CHANGED?
           │ Y
           ▼
          ⊙B
```

## INTERNATIONAL SEARCH REPORT

| | International application No. |
|---|---|
| | PCT/JP2020/017153 |

**A. CLASSIFICATION OF SUBJECT MATTER**
F25B 1/00(2006.01)i; F24F 11/47(2018.01)i
FI: F25B1/00 361A; F24F11/47
According to International Patent Classification (IPC) or to both national classification and IPC

**B. FIELDS SEARCHED**

Minimum documentation searched (classification system followed by classification symbols)
F25B1/00-49/04; F24F11/00-11/89

Documentation searched other than minimum documentation to the extent that such documents are included in the fields searched
Published examined utility model applications of Japan    1922-1996
Published unexamined utility model applications of Japan    1971-2020
Registered utility model specifications of Japan    1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-17665 A (DAIKIN INDUSTRIES, LTD.) 24 January 2008 (2008-01-24) paragraphs [0045]-[0048], [0055]-[0062], [0077]-[0091], fig. 1-2, 4 | 1-13 |
| Y | JP 2014-119218 A (DAIKIN INDUSTRIES, LTD.) 30 June 2014 (2014-06-30) paragraphs [0064]-[0065], [0104], [0106] | 1-13 |
| Y | JP 11-325539 A (MATSUSHITA ELECTRIC INDUSTRIAL CO., LTD.) 26 November 1999 (1999-11-26) paragraphs [0037]-[0038] | 4-12 |
| Y | JP 2018-59703 A (DAIKIN INDUSTRIES, LTD.) 12 April 2018 (2018-04-12) paragraph [0061] | 7-12 |
| Y | JP 2010-84968 A (MITSUBISHI ELECTRIC CORP.) 15 April 2010 (2010-04-15) paragraphs [0153]-[0158] | 11-12 |
| A | WO 2018/034003 A1 (MITSUBISHI ELECTRIC CORP.) 22 February 2018 (2018-02-22) paragraphs [0039], [0042]-[0043], [0046], fig. 6, 9 | 1, 13 |
| A | JP 2015-124929 A (DAIKIN INDUSTRIES, LTD.) 06 July 2015 (2015-07-06) paragraphs [0018], [0054]-[0066], fig. 1, 4 | 1, 5, 13 |

☐ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 16 July 2020 (16.07.2020) | 28 July 2020 (28.07.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

INTERNATIONAL SEARCH REPORT
Information on patent family members

| International application No. |
|---|
| PCT/JP2020/017153 |

| Patent Documents referred in the Report | Publication Date | Patent Family | Publication Date |
|---|---|---|---|
| JP 2008-17665 A | 24 Jan. 2008 | US 2009/0195070 A1 paragraphs [0072]-[0077], [0086]-[0089], [0115]-[0133], fig. 1-2, 4 WO 2008/004625 A1 EP 2048757 A1 KR 10-2009-0035555 A CN 101485060 A | |
| JP 2014-119218 A | 30 Jun. 2014 | (Family: none) | |
| JP 11-325539 A | 26 Nov. 1999 | (Family: none) | |
| JP 2018-59703 A | 12 Apr. 2018 | (Family: none) | |
| JP 2010-84968 A | 15 Apr. 2010 | (Family: none) | |
| WO 2018/034003 A1 | 22 Feb. 2018 | (Family: none) | |
| JP 2015-124929 A | 06 Jul. 2015 | (Family: none) | |

Form PCT/ISA/210 (patent family annex) (January 2015)

**REFERENCES CITED IN THE DESCRIPTION**

**Patent documents cited in the description**

- JP 2014119218 A